# EUROPEAN PATENT SPECIFICATION

(11) **EP 3 570 143 B1**
(45) Date of publication and mention of the grant of the patent: **31.05.2023**
(21) Application number: 19168861.3
(22) Date of filing: 12.04.2019
(51) Int. Cl.: G06F 3/01, B06B 1/04

(54) **RESPONSIVE FORCE GENERATOR AND VEHICLE-MOUNTED DISPLAY DEVICE INCLUDING RESPONSIVE FORCE GENERATOR**
REAKTIONSKRAFTERZEUGER UND FAHRZEUGMONTIERTE ANZEIGEVORRICHTUNG MIT EINEM REAKTIONSKRAFTERZEUGER
GÉNÉRATEUR DE FORCE RÉACTIVE ET AFFICHEUR MONTÉ SUR VÉHICULE COMPRENANT UN GÉNÉRATEUR DE FORCE RÉACTIVE

(30) Priority: 17.05.2018 JP 2018095258
(43) Date of publication of application: 20.11.2019
(73) Proprietor: Alpine Electronics, Inc., Tokyo 145-8501 (JP)
(72) Inventor: SHIRASHIMA, Hitoshi, Iwaki, Fukushima 970-1192 (JP); KATO, Ichiro, Iwaki, Fukushima 970-1192 (JP)
(74) Representative: Schmitt-Nilson Schraud Waibel Wohlfrom Patentanwälte Partnerschaft mbB

(56) References cited:
- US-A1- 2006 146 037
- US-A1- 2010 149 111

## Description

The present invention relates to a responsive force generator that provides linear acceleration to an operable member when an operation unit included in the operable member is manipulated by a hand or a finger and a vehicle-mounted display device including the responsive force generator.

JP 2017-91109 A discloses a support structure for an operation panel.

In this support structure, an operation panel having an operation surface is supported over a base member by a pair of support plates. The pair of support plates extend along opposite sides of the operation panel such that the support plates are parallel to each other. The support plates each include elastically deformable curved parts. An actuator including a piezoelectric element to generate vibration is secured to a rear surface of the operation panel. The actuator is located in proximity to one of the support plates. In the support structure, the support plates are arranged on the opposite sides of the operation panel and opposite sides correspond to nodes of vibration of the operation panel. Such a configuration reduces or eliminates the likelihood that the support plates may interfere with vibration of the operation panel when the actuator operates, thus preventing vibration energy loss.

JP 2015-103255 A discloses a suspension system for supporting a touch screen.

As illustrated in Fig. 10 of JP 2015-103255 A, suspension systems guide a touch screen such that the touch screen is movable relative to a housing component only in an X-axis direction along a surface of the touch screen. The suspension systems include first and second elements having sufficient stiffness to support the touch screen in the X-axis direction. An actuator is secured to the touch screen. The touch screen is movable along the X-axis in response to a force produced along the X-axis by the actuator.

In the support structure disclosed in JP 2017-91109 A, the opposite sides of the operation panel are supported by the support plates having a length along the sides. Such arrangement provides a small degree of freedom of movement of the operation panel. Although JP 2017-91109 A does not describe a direction of vibration applied to the operation panel by the actuator, the small degree of freedom of movement of the operation panel makes a user difficult to feel a large responsive force in any direction of vibration generated by the actuator.

In the suspension systems disclosed in JP 2015-103255 A, the touch screen is guided by axial support structures such that the touch screen is movable only in the X-axis direction. In such a configuration, a little inclination of the direction of a force applied to the touch screen by the actuator relative to the X-axis direction increases friction of the axial support structures, making it difficult to smoothly move the touch screen. Therefore, extremely high accuracy of assembly is required.

US 2010/149111 A1 discloses a system for stabilizing haptic touch panels or touch surfaces, comprising a housing having a base, a touch sensitive input device, a first support member coupled to the base via a first hinge and coupled to the touch sensitive input device via a second hinge, a second support member coupled to the base via a third hinge and coupled to the touch sensitive input device via a fourth hinge, wherein the first support member and the second support member are configured to facilitate movement of the touch sensitive input device in a first degree of freedom.

The present invention,in view of the above-described disadvantages in the related art, aims to provide a responsive force generator that enables an operable member to generate a large responsive force in one direction and that can be operated with low load, and a vehicle-mounted display device including the responsive force generator.

The invention relates to a responsive force generator and a vehicle-mounted display device according to the appended claims 1 and 4, respectively. Preferred embodiments are disclosed in the dependent claims 2 and 3.

In the responsive force generator according to aspects of the present invention, the operable member is supported by the support base with the pair of support links. Rotation of the support links allows the operable member to be movable along the movable support line connecting the pair of movable support points. The acceleration generating unit provides acceleration to the operable member in the direction parallel to the movable support line such that the operable member is movable in the direction parallel to the movable support line, thus effectively providing a responsive force to a user's finger or hand.

According to aspects of the invention, the operable member is shifted by rotation of the support links. Such a mechanism prevents a load necessary for operating the operable member from becoming excessively large if the direction of acceleration is slightly out of parallelism with the movable support line. The operable member can be smoothly operated. Furthermore, extremely high accuracy of assembly is not required.

The vehicle-mounted display device according to aspects of the present invention enables a responsive force generated by the responsive force generator to be effectively provided from the display screen, serving as an operation unit, to a user's finger or hand if the device is affected by vibration of a vehicle body.

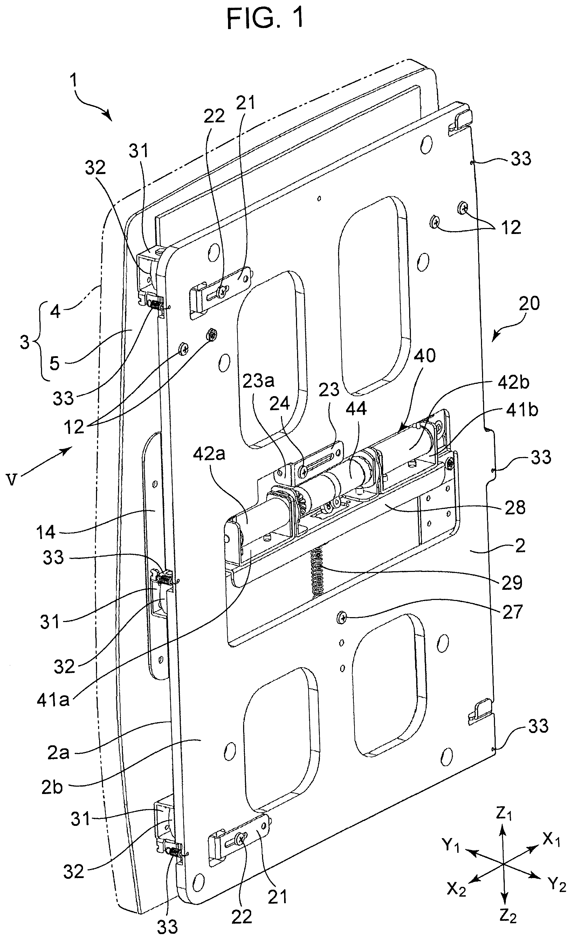

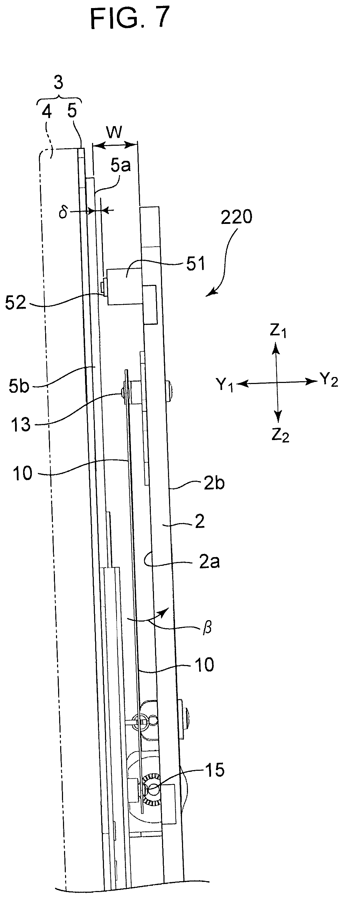

It is noted that the claimed invention relates to the response force generator and vehicle-mounted display device described in relation to Fig. 7 with reference to the third embodiment of the present invention. Figs. 1 to 5 illustrate basic principles of the claimed invention, but do not entirely fall under the scope of the claimed invention.

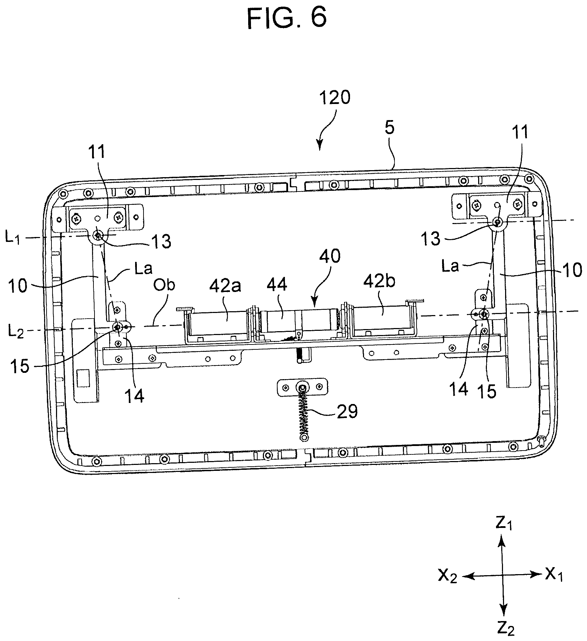

Accordingly, any reference in the description to the first embodiment described in the context of Figs. 1 to 5 should be understood as a reference to an example that is provided as useful for understanding the claimed invention but without being part of the claimed invention. Fig. 6 illustrates further aspects that are applicable to the claimed invention.
Fig. 1 is a rear perspective view of a vehicle-mounted display device including a responsive force generator according to a first embodiment of the present disclosure;
Fig. 2 is a rear exploded perspective view of the vehicle-mounted display device of Fig. 1 with a support base removed;
Fig. 3 is a rear view of the vehicle-mounted display device of Fig. 1 with the support base removed;
Fig. 4 is an enlarged rear view of part of the vehicle-mounted display device of Fig. 3;
Fig. 5 is a side view of part of the vehicle-mounted display device of Fig. 1 as viewed in a direction of arrow V in Fig. 1;
Fig. 6 is a rear view of a vehicle-mounted display device including a responsive force generator according to a second embodiment of the present disclosure, Fig. 6 corresponds to Fig. 3; and
Fig. 7 is a side view of part of a vehicle-mounted display device including a responsive force generator according to a third embodiment of the present invention, Fig. 7 corresponds to Fig. 5.

Fig. 1 illustrates a vehicle-mounted display device 1 including a responsive force generator 20 according to a first embodiment of the present disclosure. As used herein, the term "Y₁ direction or side" refers to a forward direction or a front side of the vehicle-mounted display device 1 and the responsive force generator 20, and the term "Y₂ direction or side" refers to a rearward direction or a rear side thereof. The Y₁ direction is a display direction in which the vehicle-mounted display device 1 is directed to the interior of a vehicle. The Y₂ direction is a forward direction of travel of the vehicle. The term "Y₁-Y₂ direction" as used herein refers to a facing direction in which an operable member 3 faces a support base 2. As used herein, the term "X₁ direction or side" refers to a rightward direction or a right side of the vehicle-mounted display device 1 and the responsive force generator 20 as viewed from the rear side, the term "X₂ direction or side" refers to a leftward direction or a left side thereof as viewed from the rear side, the term "Z₁ direction" refers to an upward direction thereof, and the term "Z₂ direction" refers to a downward direction thereof.

The vehicle-mounted display device 1 includes the support base 2. The support base 2 is a plate made of metal or synthetic resin. The support base 2 is fixed to an inside or a surface of a dashboard or instrument panel located in front part of the vehicle interior. The dashboard or instrument panel may house a lifting and lowering device or a front-rear driving device and the support base 2 may be fixed to a movable portion of such a device.

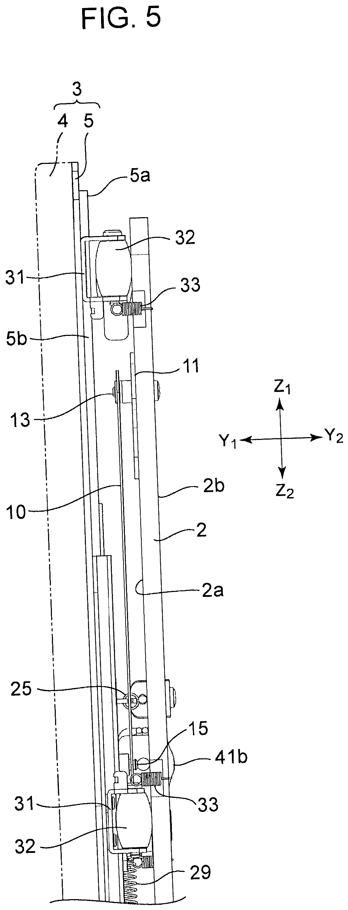

The operable member 3 is disposed in front of (or in the Y₁ direction farther than) the support base 2. The operable member 3 includes a case 4, represented by a chain double-dashed line in Figs. 1 and 5, and a movable plate 5, serving as a rear surface of the case 4. The case 4 accommodates a display panel and various electronic circuits necessary for driving the display panel. The display panel includes display cells, such as color liquid crystal display cells or electroluminescent display cells. The display panel has a display screen facing forward (in the Y₁ direction).

The display screen functions as an operation unit including transparent touch sensors. The touch sensors are capacitive sensors configured such that a plurality of transparent electrodes are arranged on a transparent substrate. A touch of a user's finger on the display screen causes a change in capacitance to be detected by the electrodes. A change in capacitance distribution is used to determine the coordinates of a finger touch position. The touch sensors may be resistive sensors configured such that a transparent substrate having transparent electrodes arranged on the entire surface of the substrate and a transparent film having transparent electrodes similarly arranged on the entire surface of the film face each other at a distance from each other. A push at any position on the transparent film of the resistive sensors causes a short circuit between a transparent electrode on the transparent film and a transparent electrode on the transparent substrate. A change in resistance between electrode elements arranged on frames of the short-circuited transparent electrodes is detected, so that the coordinates of a finger touch position are determined.

The operable member 3 may include an operation unit, such as a touch sensor or a mechanical push-button switch, disposed in an area other than the display screen of the display panel. The operable member 3 may include no display panel and may include only an operation unit disposed on an operation surface facing in the Y₁ direction. In such a case, the responsive force generator 20 constitutes part of a vehicle-mounted operation device.

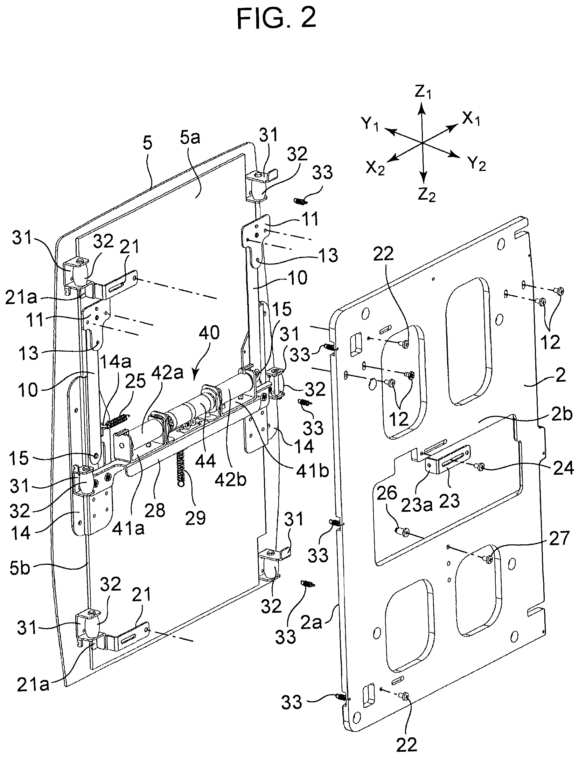

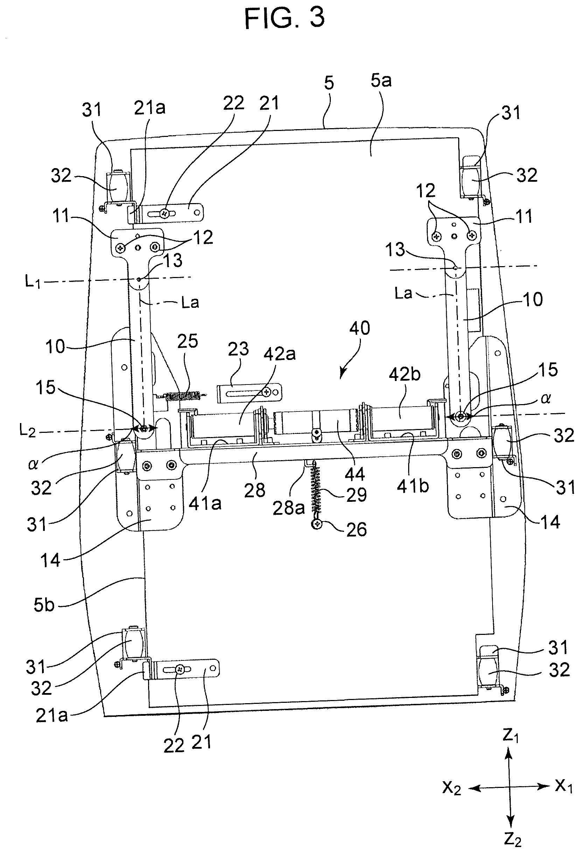

Referring to Figs. 2 and 3, the operable member 3 is supported by the support base 2 with a pair of support links 10. As illustrated in Fig. 2, each of the support links 10 has a stationary bracket 11 in its upper part. The pair of stationary brackets 11, which are metal plates, are arranged on a front surface 2a, facing forward (in the Y₁ direction), of the support base 2. The stationary brackets 11 are fastened to the front surface 2a by fixing screws 12, which are inserted into the support base 2 from the rear side. The upper parts of the support links 10 are rotatably coupled to the stationary brackets 11 by stationary support shafts 13. The stationary support shafts 13 each have an axis, serving as a stationary support point. The support links 10 are rotatably coupled to the stationary brackets 11 such that each support link 10 is rotatable about the stationary support point, serving as a pivot.

As illustrated in Figs. 2 and 3, each of the support links 10 has a movable bracket 14 in its lower part. The pair of movable brackets 14 are fastened to a rear surface 5a, facing rearward (in the Y₂ direction), of the movable plate 5 included in the operable member 3. The lower parts of the support links 10 are rotatably coupled to the movable brackets 14 by movable support shafts 15. The movable support shafts 15 each have an axis, serving as a movable support point. The support links 10 are rotatably coupled to the movable brackets 14 such that each support link 10 is rotatable about the movable support point, serving as a pivot.

The stationary support shafts 13 supporting the upper parts of the support links 10 are arranged apart from each other in a lateral or right-left direction, and the movable support shafts 15 supporting the lower parts of the support links 10 are also arranged apart from each other in the right-left direction. Fig. 3 illustrates a stationary support line L₁, which is an imaginary line connecting the stationary support points that serve as the axes of the right and left stationary support shafts 13, and a movable support line L₂, which is an imaginary line connecting the movable support points that serve as the axes of the right and left movable support shafts 15. Each stationary support point can be defined as a point of intersection of the axis of the stationary support shaft 13 and a surface of the support link 10 facing in the Y₁ direction or a surface thereof facing in the Y₂ direction. Each movable support point can be defined as a point of intersection of the axis of the movable support shaft 15 and the surface of the support link 10 facing in the Y₁ direction or the surface thereof facing in the Y₂ direction. Therefore, both the stationary support line L₁ and the movable support line L₂ are located within an imaginary plane that is parallel to the rear surface 5a of the movable plate 5 and is parallel to an X-Z plane. The stationary support line L₁ and the movable support line L₂ are parallel to each other and are orthogonal to a Z₁-Z₂ direction, serving as a design direction of gravity.

Fig. 3 further illustrates rotation reference lines La, each serving as an imaginary line connecting the stationary support point and the movable support point at which the same support link 10 is supported. Each of the rotation reference lines La extends in the Z₁-Z₂ direction, serving as the design direction of gravity. The rotation reference line La extends along the surface of the support link 10 facing in the Y₁ direction or the surface thereof facing in the Y₂ direction.

Each of the support links 10 extends in an up-down direction (Z₁-Z₂ direction) between the stationary support point and the movable support point along the imaginary plane parallel to the rear surface 5a of the movable plate 5 and parallel to the X-Z plane. The support link 10, which is a plate-shaped member, has surfaces extending along the imaginary plane parallel to the X-Z plane. The support link 10 is rotatable about a pivot, serving as an axis extending in a Y direction perpendicular to the X-Z plane. This allows a reduction in dimension in the Y direction of a space where the support links 10 are arranged, thus reducing the thickness, or dimension in a front-rear direction (Y₁-Y₂ direction), of the device.

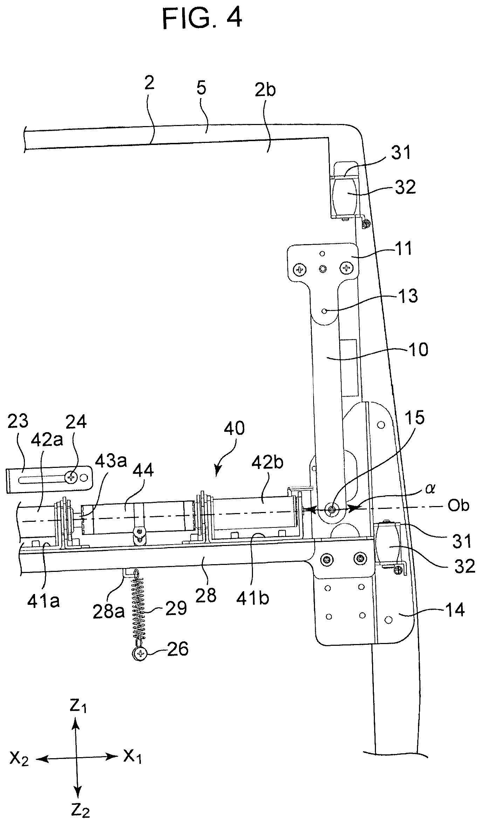

While any external force is not acting on the operable member 3, the stationary support line L₁, the movable support line L₂, and the pair of rotation reference lines La form a rectangle as illustrated in Fig. 3. When a force or acceleration acts on the operable member 3 in the right-left direction (X₁-X₂ direction), the pair of support links 10 are rotated about the stationary support shafts 13 located in the upper parts of the support links 10, and the movable support shafts 15 located in the lower parts of the support links 10 are rotated in an α direction illustrated in Figs. 3 and 4, so that the operable member 3 is shifted in the right-left direction (X₁-X₂ direction). Generating a responsive force requires only a very small angle of rotation of the operable member 3 in the α direction. Therefore, the motion of the operable member 3 in the up-down direction (Z₁-Z₂ direction) is negligible.

As illustrated in Fig. 2, two stoppers 21 are arranged on the front surface 2a of the support base 2 such that one stopper 21 is located at an upper level and the other stopper 21 is located at a lower level. The stoppers 21 are fastened to the front surface 2a of the support base 2 by fixing screws 22, which are inserted into the support base 2 from the rear side. As illustrated in Figs. 2 and 3, the rear surface 5a of the movable plate 5 included in the operable member 3 has a step 5b located adjacent to a left side of the rear surface 5a (adjacent to the X₂ side). The step 5b is in contact with stopper protrusions 21a on left ends of the stoppers 21 to limit movement of the operable member 3 in the leftward direction (X₂ direction).

As illustrated in Fig. 2, a spring attachment 23 is disposed on a rear surface 2b, which faces rearward (in the Y₂ direction), of the support base 2. The spring attachment 23 is fastened to the rear surface 2b by a fixing screw 24. The spring attachment 23 includes a spring catch 23a bent forward. The movable bracket 14 located adjacent to the left side of the rear surface 5a (adjacent to the X₂ side) also has a spring catch 14a. An extension coil spring 25 is stretched between the spring catch 14a of the movable bracket 14 and the spring catch 23a provided for the support base 2. The resilience of the extension coil spring 25 causes the step 5b of the movable plate 5 to be pressed against the stopper protrusions 21a.

Referring to Fig. 2, a spring catch 26 is disposed on the front surface 2a of the support base 2. The spring catch 26 is fastened to the front surface 2a of the support base 2 by a fixing screw 27, which is inserted into the support base 2 from the rear side. Referring to Fig. 3, a central bracket 28 is fastened to the rear surface 5a of the movable plate 5 included in the operable member 3. The central bracket 28 has a spring catch 28a. An extension coil spring 29 is stretched between the spring catch 26 and the spring catch 28a. The resilience of the extension coil spring 29 reduces or eliminates wobbling of the support links 10 relative to the movable support shafts 15 and the stationary support shafts 13.

Referring to Figs. 2 and 3, spacer brackets 31 are fastened at three positions adjacent to a right side of the rear surface 5a (adjacent to the X₁ side) of the movable plate 5 included in the operable member 3 and at three positions adjacent to the left side thereof (adjacent to the X₂ side). The spacer brackets 31 each rotatably support a spacer roller 32, serving as a movable spacer. The spacer roller 32 has an axis of rotation extending in the up-down direction (Z₁-Z₂ direction). Referring to Fig. 5, springs 33 extending in the facing direction in which the support base 2 faces the operable member 3 are stretched between the spacer brackets 31 and right and left sides of the support base 2. Each of the springs 33 is an extension coil spring. The springs 33 have sufficient resilience to pull the support base 2 and the operable member 3 in the facing direction (Y₁-Y₂ direction) in which the support base 2 faces the operable member 3, so that the spacer rollers 32 are pressed against the front surface 2a of the support base 2.

The spacer brackets 31, the movable spacers 32 and the springs 33 do not form part of the claimed responsive force generator. Accordingly, the aspect that close contact between the spacer rollers 32 and the support base 2 prevents the operable member 3 from moving rearward (in the Y₂ direction) when the display screen of the operable member 3 or the operation unit disposed in the area other than the display screen is pressed in the X₂ direction, is not covered by the claimed invention. In addition, since the axis of rotation of each of the spacer rollers 32 extends in the up-down direction (Z₁-Z₂ direction), the operable member 3 is movable in the right-left direction (X₁-X₂ direction). The movable spacers may be in any form other than the roller form. For example, the movable spacers may be made of low-friction resin so that the movable plate 5 is slidable relative to the support base 2.

Referring to Figs. 2 and 3, an acceleration generating unit 40 is mounted on the central bracket 28 fastened to the rear surface 5a of the movable plate 5. As enlarged and illustrated in Fig. 4, the acceleration generating unit 40 includes a first mechanical bracket 41a secured to left part of the central bracket 28 (adjacent to the X₂ side) and a second mechanical bracket 41b secured to right part of the central bracket 28 (adjacent to the X₁ side). A first solenoid 42a is secured to the first mechanical bracket 41a, and a second solenoid 42b is secured to the second mechanical bracket 41b. In the acceleration generating unit 40, the first solenoid 42a and the second solenoid 42b constitute an actuator. A mass 44 is disposed between the first solenoid 42a and the second solenoid 42b. A plunger 43a of the first solenoid 42a and a plunger of the second solenoid 42b are secured to the mass 44. Operation of these plungers allows the mass 44 to be movable in the X₁-X₂ direction.

In the acceleration generating unit 40, the mass 44 is pulled in the X₁ direction by a spring element (not illustrated). To generate acceleration, a coil of the first solenoid 42a is energized to attract the mass 44 in the X₂ direction, and just after that, the coil of the first solenoid 42a is de-energized and a coil of the second solenoid 42b is simultaneously energized, so that the mass 44 is pulled in the X₁ direction by attraction of the second solenoid 42b and the resilience of the above-described spring element. The mass 44 that has been rapidly moved in the X₂ direction is hit against the second mechanical bracket 41b, thus providing acceleration to the operable member 3 in the X₁ direction. This acceleration provides a responsive force as tactile feedback to a finger or hand of the user contacting the display screen. Alternatively, the mass 44 may be moved in the X₂ direction by a spring element in advance. To generate acceleration, the first solenoid 42a and the second solenoid 42b may be simultaneously moved in the X₁ direction so that the mass 44 can be rapidly moved in the X₁ direction by a combination of driving forces acting in the same direction produced by the two solenoids.

In the acceleration generating unit 40, the mass 44 may be moved once in the X₁ direction by using the driving forces produced by the solenoids 42a and 42b, thus providing acceleration to the operable member 3. The mass 44 may be reciprocated multiple times in the X₁-X₂ direction, thus providing vibration as well as acceleration to the operable member 3. The acceleration generating unit 40 may be a vibration generator. For example, a large mass may be supported at a neutral position by a spring, and may be vibrated in the X₁-X₂ direction by an actuator including a coil and a magnet.

Fig. 4 illustrates a drive axis Ob of the solenoids 42a and 42b constituting the actuator. The drive axis Ob coincides with the axes of the plungers of the solenoids 42a and 42b. The center of gravity of the mass 44 is located on the drive axis Ob. The movable support points, serving as the axes of the movable support shafts 15 located in the lower parts of the support links 10, are located on the drive axis Ob in the facing direction (Y₁-Y₂ direction) in which the support base 2 faces the operable member 3. In other words, the drive axis Ob coincides with the movable support line L₂ in the Y₁-Y₂ direction. Furthermore, the center of gravity of the operable member 3 is preferably located on the drive axis Ob in the Y₁-Y₂ direction.

An operation of the responsive force generator 20 will now be described.

In the vehicle-mounted display device 1 of Fig. 1, when the user touches any part of the display screen with his or her finger or hand while looking at an image displayed on the display screen of the operable member 3, a detection circuit detects a detection output from the touch sensors included in the display screen to determine a portion of the image touched by the finger, and transmits a detection signal to a controller (not illustrated). The controller receives the detection signal, and determines an operation performed by the user on the basis of an image signal of the image displayed on the display screen, thus starting a process based on the intended operation. Upon receiving the detection signal, the controller outputs a driving instruction for driving the solenoids 42a and 42b to a driving circuit of the acceleration generating unit 40.

The first solenoid 42a and the second solenoid 42b are energized in response to the driving instruction from the controller, thus moving the mass 44. The mass 44 is hit against the second mechanical bracket 41b, thus providing acceleration to the operable member 3 in the X₁ direction. The acceleration is applied as a responsive force to the finger or hand of the user from the display screen.

The acceleration generating unit 40 provides acceleration to, or accelerates, the operable member 3 along the drive axis Ob extending in the X₁-X₂ direction. The operable member 3 accelerated along the drive axis Ob is shifted in the direction of the acceleration by rotation of the support links 10 in the α direction. The operable member 3 is pressed against the stoppers 21 located adjacent to the X₂ side by the extension coil spring 25. Therefore, the operable member 3 is slightly shifted in the X₁ direction when accelerated. Consequently, since the magnitude of shift of the operable member 3 in the X₁-X₂ direction is very small and the angle of rotation of the operable member 3 in the α direction is also very small, a shift component in the Z₁-Z₂ direction is negligible.

When the acceleration generating unit 40 provides acceleration to the operable member 3 along the drive axis Ob, the operable member 3 is shifted substantially in the X₁-X₂ direction, or experiences acceleration concentrated in one direction. The acceleration in one direction enables the user to effectively sense a responsive force from the operable member 3 with his or her finger or hand. If the display screen is constantly being vibrated in the front-rear direction (Y₁-Y₂ direction) by vibration of a vehicle body, the display screen can be moved in the X₁ direction with high acceleration. This enables the user to effectively sense a responsive force with his or her finger or hand.

The pair of support links 10 are rotated in the α direction, so that the operable member 3 is shifted in the direction along the drive axis Ob. Such a shift support structure achieves a lower sliding friction load than that in a structure in which the operable member 3 is shifted by sliding along a shaft extending in the X₁-X₂ direction.

The drive axis Ob of the acceleration generating unit 40 coincides with the movable support line L₂, which connects the movable support points at which the support links 10 are coupled to the operable member 3, in the Y₁-Y₂ direction. In addition, the center of gravity of the operable member 3 is preferably located on the drive axis Ob in the Y₁-Y₂ direction. In this arrangement, acceleration in the direction along the drive axis Ob makes the operable member 3 less likely to rotate within the X-Z plane. Therefore, kinetic energy in the X₁ direction produced by the acceleration generating unit 40 can be effectively used as a driving force for the operable member 3.

Fig. 6 illustrates a responsive force generator 120 according to a second embodiment of the present disclosure. In the first embodiment illustrated in Fig. 3, the stationary support line L₁, the movable support line L₂, and the rotation reference lines La of the right and left support links 10 have a positional relationship therebetween to form a rectangle. When the operable member 3 is shifted in the X₁-X₂ direction, the lines form a parallelogram. In the second embodiment illustrated in Fig. 6, the distance in the right-left direction (X₁-X₂ direction) between the movable support shafts 15 located in the lower parts of the right and left support links 10 is slightly shorter than that between the stationary support shafts 13 located in the upper parts of the support links 10. The stationary support line L₁, the movable support line L₂, and the rotation reference lines La of the right and left support links 10 have a positional relationship therebetween to form a trapezoid.

For example, each movable support shaft 15 is fixed to the corresponding movable bracket 14 and an oblong hole through which the movable support shaft 15 extends is formed in lower part of the corresponding support link 10, or alternatively, each movable support shaft 15 is fixed to lower part of the corresponding support link 10 and an oblong hole is formed in the corresponding movable bracket 14. This arrangement enables the support links 10 to rotate in the α direction, thus shifting the operable member 3 in the right-left direction (X₁-X₂ direction). Since the angle of rotation of the movable support shafts 15 is very small, the motion of the operable member 3 in the up-down direction and the rotation thereof within the X-Z plane are negligible.

Fig. 7 illustrates a responsive force generator 220 according to a third embodiment of the present invention. The responsive force generator 220 includes no movable spacers (e.g., spacer rollers 32 illustrated in Fig. 5). The support links 10 are metal leaf springs. The support links 10 have sufficient stiffness to maintain the distance, W, between the support base 2 and the movable plate 5 of the operable member 3 facing each other in the front-rear direction. For example, a compression coil spring may be disposed between the support base 2 and the movable plate 5 so that the distance W is maintained by the spring in addition to the stiffness of the support links 10.

In such a configuration, when the user presses the display screen of the operable member 3 with his or her finger or hand, the support links 10 are deformed in a β direction and the above-described compression coil spring is also deformed, so that the operable member 3 is moved in the X₂ direction. The operable member 3 faces a plurality of stoppers 51 in the X₂ direction. The stoppers 51 limit a shift of the operable member 3 to a very small distance δ when the operable member 3 is pressed. Any of the stoppers 51 includes a sensor (force sensor) 52 that detects a pressing force applied to the stopper 51. The sensor includes a microelectromechanical systems (MEMS) switch. When the user presses the display screen with his or her finger or hand, the operable member 3 is shifted in the X₂ direction. This allows the user to feel as if the user is pressing the screen with his or her finger or hand. In addition, the sensor 52 can provide a press detection output when the operable member 3 is pressed.

## Claims

1. A responsive force generator (20) comprising an operable member (3) including at least one operation unit, a support base (2) supporting the operable member (3), and an acceleration generating unit (40) configured to provide acceleration to the operable member (3), wherein:
the responsive force generator (20) further comprises a pair of support links (10) with which the operable member (3) is supported by the support base (2), such that the operable member (3) is movable relative to the support base (2),
each of the support links (10) is rotatably supported on the support base (2) at a respective stationary support point and is rotatably supported on the operable member (3) at a respective movable support point, the movable support point being movable relative to the support base (2) and stationary relative to the operable member (3),
the stationary support points of the support links (10) are located on an imaginary stationary support line (L1),
the movable support points of the support links (10) are located on an imaginary movable support line (L2),
the stationary support line (L1) and the movable support line (L2) are parallel to each other, and
the acceleration generating unit (40) provides acceleration to the operable member (3) in a direction parallel to the movable support line (L2), so that the operable member (3) is shifted in the direction parallel to the movable support line (L2), and thereby the operable member (3) tft is moved relative to the support base (2),
**characterised in that**
the support links (10) are bendable in a facing direction in which the operable member (3) faces the support base (2) such that the operable member (3) is movable toward the support base (2) when the operable member (3) is pressed toward the support base (2).

2. The responsive force generator (20) according to Claim 1, wherein:
the acceleration generating unit (40) includes a mass (44) and an actuator (42a, 42b) configured to provide acceleration to the mass (44),
the actuator has a drive axis (Ob), and
the drive axis (Ob) coincides with the movable support line (L2) in a facing direction in which the operable member (3) faces the support base (2).

3. The responsive force generator (20) according to Claim 1 or 2, wherein
each of the support links (10) is a plate-shaped member having a surface parallel to an imaginary plane including both the stationary support line (L1) and the movable support line (L2), and
each of the support links (10) is rotatable about an axis extending perpendicular to the imaginary plane at each of the stationary support point and the movable support point.

4. A vehicle-mounted display device (1)
comprising the responsive force generator (20) according to any of Claims 1 to 3, wherein the operable member (3) includes a display screen.

## Patentansprüche

1. Reaktionskrafterzeuger (20), der ein betätigbares Element (3) besitzt, das mindestens eine Betätigungseinheit, eine Trägerbasis (2), die das betätigbare Element (3) trägt, und eine Beschleunigungserzeugungseinheit (40) aufweist, die dazu ausgebildet ist, dem betätigbaren Element (3) eine Beschleunigung zu erteilen,
wobei der Reaktionskrafterzeuger (20) ferner ein Paar Stützglieder (10) besitzt, mit denen das betätigbare Element (3) von der Trägerbasis (2) abgestützt ist, so dass das betätigbare Element (3) relativ zu der Trägerbasis (2) beweglich ist,
wobei jedes der Stützglieder (10) an der Trägerbasis (2) an einem jeweiligen stationären Abstützpunkt drehbar gelagert ist und an dem betätigbaren Element (3) an einem jeweiligen beweglichen Abstützpunkt drehbar gelagert ist, wobei der bewegliche Abstützpunkt relativ zu der Trägerbasis (2) beweglich und relativ zu dem betätigbaren Element (3) stationär ist,
wobei sich die stationären Abstützpunkte der Stützglieder (10) auf einer imaginären stationären Abstützlinie (L1) befinden,
wobei sich die beweglichen Abstützpunkte der Stützglieder (10) auf einer imaginären beweglichen Abstützlinie (L2) befinden,
wobei die stationäre Abstützlinie (L1) und die bewegliche Abstützlinie (L2) parallel zueinander sind, und
wobei die Beschleunigungserzeugungseinheit (40) dem betätigbaren Element (3) eine Beschleunigung in einer Richtung parallel zu der beweglichen Abstützlinie (L2) erteilt, so dass das betätigbare Element (3) in der Richtung parallel zu der beweglichen Abstützlinie (L2) verschoben wird und dadurch das betätigbare Element (3) relativ zu der Trägerbasis (2) bewegt wird,
**dadurch gekennzeichnet,**
**dass** die Stützglieder (10) in einer zugewandten Richtung biegsam sind, in der das betätigbare Element (3) der Trägerbasis (2) zugewandt gegenüberliegt, so dass das betätigbare Element (3) in Richtung auf die Trägerbasis (2) bewegbar ist, wenn das betätigbare Element (3) in Richtung auf die Trägerbasis (2) gedrückt wird.

2. Reaktionskrafterzeuger (20) nach Anspruch 1,
wobei die Beschleunigungserzeugungseinheit (40) eine Masse (44) und einen Aktuator (42a, 42b) aufweist, der dazu ausgebildet ist, der Masse (44) eine Beschleunigung zu erteilen,
wobei der Aktuator eine Antriebsachse (Ob) aufweist, und
wobei die Antriebsachse (Ob) mit der beweglichen Abstützlinie (L2) in einer zugewandten Richtung übereinstimmt, in der das betätigbare Element (3) der Trägerbasis (2) zugewandt gegenüberliegt.

3. Reaktionskrafterzeuger (20) nach Anspruch 1 oder 2,
wobei jedes der Stützglieder (10) ein plattenförmiges Element ist, das eine Oberfläche parallel zu einer imaginären Ebene hat, die sowohl die stationäre Abstützlinie (L1) als auch die bewegliche Abstützlinie (L2) umfasst, und wobei jedes der Stützglieder (10) um eine Achse drehbar ist, die sich rechtwinklig zu der imaginären Ebene an jedem von dem stationären Abstützpunkt und dem beweglichen Abstützpunkt erstreckt.

4. In einem Fahrzeug angebrachte Anzeigevorrichtung (1) mit dem Reaktionskrafterzeuger (20) nach einem der Ansprüche 1 bis 3, wobei das betätigbare Element (3) einen Anzeigebildschirm umfasst.

## Revendications

1. Un générateur de force réactif (20) qui comprend un élément (3) qui peut être activé englobant au moins une unité d'activation, une base de support (2) qui supporte l'élément (3) qui peut être activé et une unité de génération d'une accélération (40) qui est configurée pour procurer une accélération à l'élément (3) qui peut être activé ; dans lequel
le générateur de force réactif (20) comprend en outre une paire de liaisons de support (10) avec lesquelles l'élément (3) qui peut être activé est supporté par la base de support (2), d'une manière telle que l'élément (3) qui peut être activé est mobile par rapport à la base de support (2) ;
chacune des liaisons de support (10) est supportée en rotation sur la base de support (2) à un point de support
stationnaire respectif et est supportée en rotation sur l'élément (3) qui peut être activé à un point de support mobile respectif, le point de support mobile étant mobile par rapport à la base de support (2) et étant stationnaire par rapport à l'élément (3) qui peut être activé ;
les points de support stationnaires des liaisons de support (10) sont disposés sur une ligne de support stationnaire imaginaire (L1) ;
les points de support mobiles des liaisons de support (10) sont disposés sur une ligne de support mobile imaginaire (L2) ;
la ligne de support stationnaire (L1) et la ligne de support mobile (L2) sont parallèles l'une à l'autre ; et
l'unité de génération d'une accélération (40) procure une accélération à l'élément (3) qui peut être activé, dans une direction qui est parallèle à la ligne de support mobile (L2), d'une manière telle que l'élément (3) qui peut être activé est décalé dans la direction parallèle par rapport à la ligne de support mobile, tant et si bien que l'élément (3) qui peut être activé est déplacé par rapport à la base de support (2) ;
**caractérisé en ce que**
les liaisons de support (10) sont flexibles dans une direction opposée dans laquelle l'élément (3) qui peut être activé fait face à la base de support (2), d'une manière telle que l'élément (3) qui peut être activé est mobile dans la direction de la base de support (2) lorsque l'élément (3) qui peut être activé est comprimé dans la direction de la base de support (2),

2. Le générateur de force réactif (20) selon la revendication 1, dans lequel :
l'unité de génération d'une accélération (40) englobe une masse (44) et un actionneur (42a, 42b) qui est configuré pour procurer une accélération à la masse (44) ;
l'actionneur possède un axe d'entraînement (Ob) ; et
l'axe d'entraînement (Ob) coïncide avec la ligne de support mobile (L2) dans une direction opposée dans laquelle l'élément (3) qui peut être activé fait face à la base de support (2).

3. Le générateur de force réactif (20) selon la revendication 1 ou 2, dans lequel :
chacune des liaisons de support (10) représente un élément possédant une configuration en forme de plaque, qui possède une surface parallèle à un plan imaginaire qui englobe à la fois la ligne de support stationnaire (L1) et la ligne de support mobile (L2) ; et
chacune des liaisons de support (10) est rotative autour d'un axe qui s'étend perpendiculairement au plan imaginaire à chacun des points de support stationnaires et des points de support mobiles.

4. Un dispositif d'affichage (1) monté à bord d'un véhicule, qui comprend le générateur de force réactif (20) selon l'une quelconque des revendications 1 à 3 ; dans lequel l'élément (3) qui peut être activé englobe un écran d'affichage.
